# EUROPEAN PATENT APPLICATION

(11) **EP 4 530 034 A1**
(43) Date of publication of application: **02.04.2025**
(21) Application number: 24201860.4
(22) Date of filing: 23.09.2024
(51) Int. Cl.: B25J 15/04, B23K 11/31, B23K 37/02

(54) **OPERATING UNIT WITH INTEGRATED TOOL-CHANGE DEVICE**

(30) Priority: 27.09.2023 IT 202300019980
(71) Applicant: Com.Imp.Ex. di Elio Strobietto, 10141 Torino (IT)
(72) Inventor: STROBIETTO, Elio, 1014 Torino (IT)
(74) Representative: Buzzi, Notaro & Antonielli d'Oulx S.p.A.

(57) **Abstract**

Described herein is an operating unit (10) that can be connected to the wrist of a robot arm comprising:
- a tool (12), and
- a supporting structure (14) carrying said tool, characterized in that the supporting structure (14) comprises a connection member (26) via which said operating unit (10) can be operatively connected in a releasable way to said wrist of the robot arm,
wherein the connection member (26) has an opening (30) on an end wall (32) thereof, which is configured to receive a head (101) of a connection device associated to the wrist of the robot arm, wherein the connection member (26) comprises an internal seat (28) accessible through said opening (30) and configured to receive blocking elements (102) carried by said head (101) so as to enable fixing of the operating unit (10) to said wrist of the robot arm.

## Description

The object of the present invention is an operating unit that can be connected to the wrist of a robot arm.

Known in the prior art are operating units, for example welding gun, of the type comprising:
- a tool; and
- a supporting structure carrying said tool;

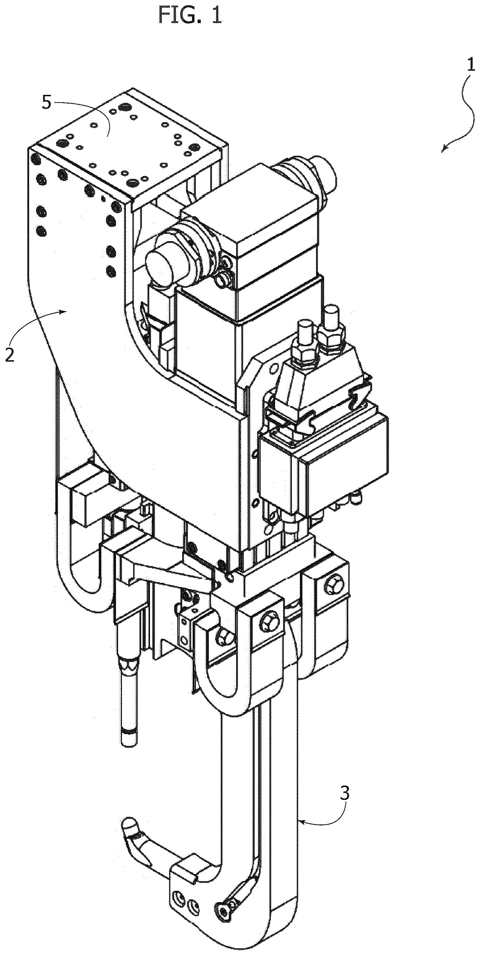

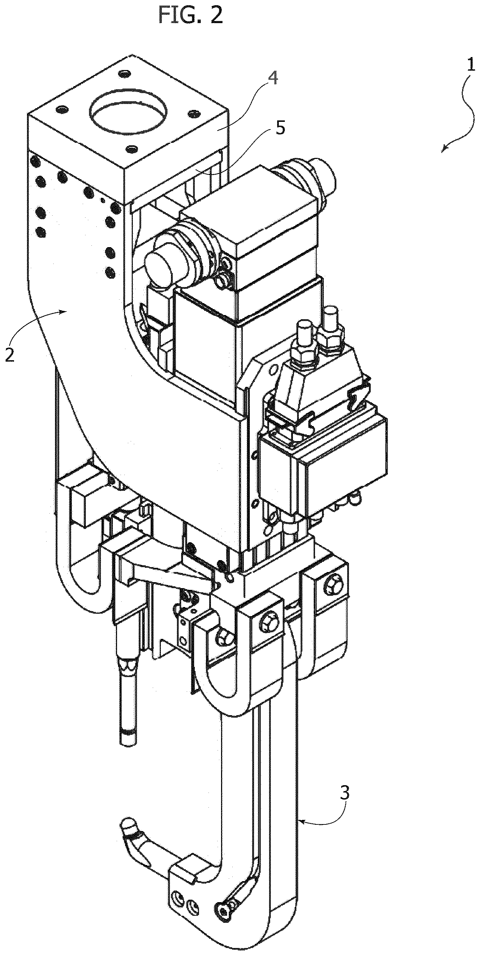

With reference to Figures 1 and 2, the reference number 1 designates as a whole an operating unit of a known type comprising a supporting structure 2 carrying a tool 3, in the case in point a welding gun. The supporting structure 2 comprises a connection portion 5.

To connect the operating unit 1 to the wrist of the robot arm, use of a tool-change device is commonly envisaged.

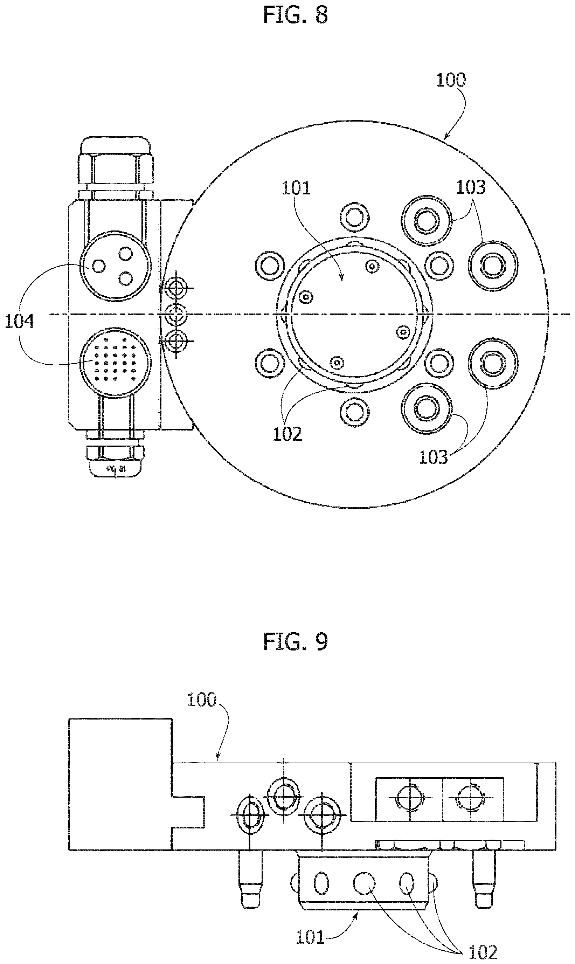

This comprises a first annular body 4 that is to be fixed to the connection portion 5 of the operating unit 1, and a second annular body 100 (Figures 8 and 9) that is to be mounted on the wrist of the robot and carries fixing members designed to connect in a releasable way the first annular body 4 to the second annular body 100.

Generally, the above fixing members are constituted by a substantially cylindrical head 101 that carries a series of blocking elements 102 that can be governed via pneumatic means into a position where they project from the outer surface of the head 101.

During operation of the tool-change device, the first annular body 4 is mounted on the cylindrical head 101 of the second annular body 100 and is fixed to the latter via activation of the blocking elements 102 referred to above.

At the same time, via coupling of the opposed faces of the two annular bodies, the connections are made for the supplies necessary for the operating unit.

In view of the foregoing, the above tool-change devices hence perform the dual function of ensuring fixing of the operating unit 1 to the wrist of the robot arm and of connecting electrical and/or hydraulic or pneumatic connections between the robot and the operating unit 1.

In the technical field here of interest, there is felt the need to provide an improved solution for connecting an operating unit to a robot arm, as compared to the prior art described.

The above object is achieved via an operating unit according to claim 1.

Further characteristics and advantages will become evident with reference to the annexed drawings, which are provided purely by way of non-limiting example and in which:
- Figure 1, which has already been described, is a perspective view of an operating unit of a known type;
- Figure 2, which has already been described, is a perspective view of the operating unit of Figure 1 connected to the first annular body of a tool-change device, which is also known;
- Figure 3 is a perspective view of an operating unit according to the present invention;
- Figure 4 is a perspective view of the operating unit of Figure 3 partially disassembled;
- Figure 5A is a front view of an alternative embodiment of the operating unit according to the present invention;
- Figure 5B is a rear view of the embodiment of Figure 5A;
- Figure 6 is a side view of the embodiment of Figure 5A;
- Figure 7 is a top plan view of the embodiment of Figure 5A;
- Figure 8 is a front view of a second annular body of a tool-change device; and
- Figure 9 is a side view of a second annular body of a tool-change device.

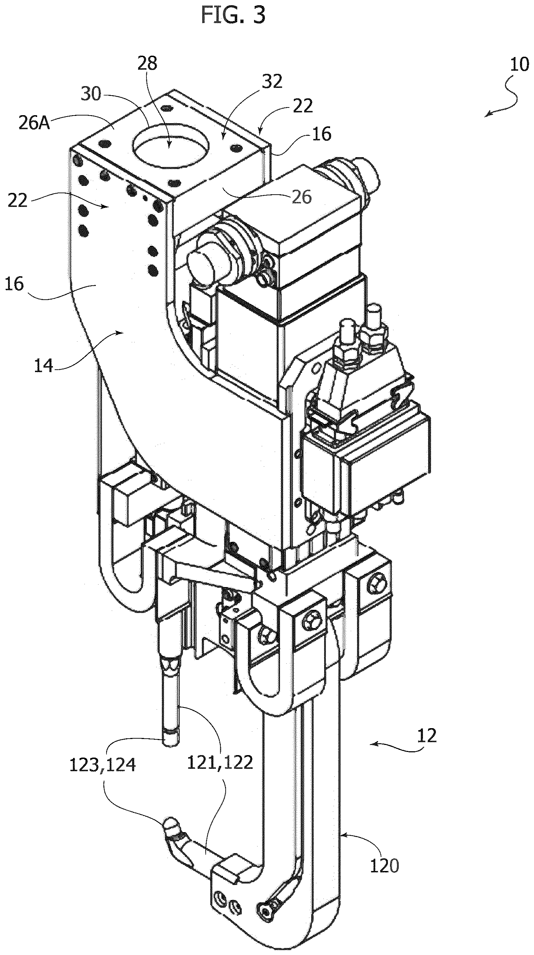

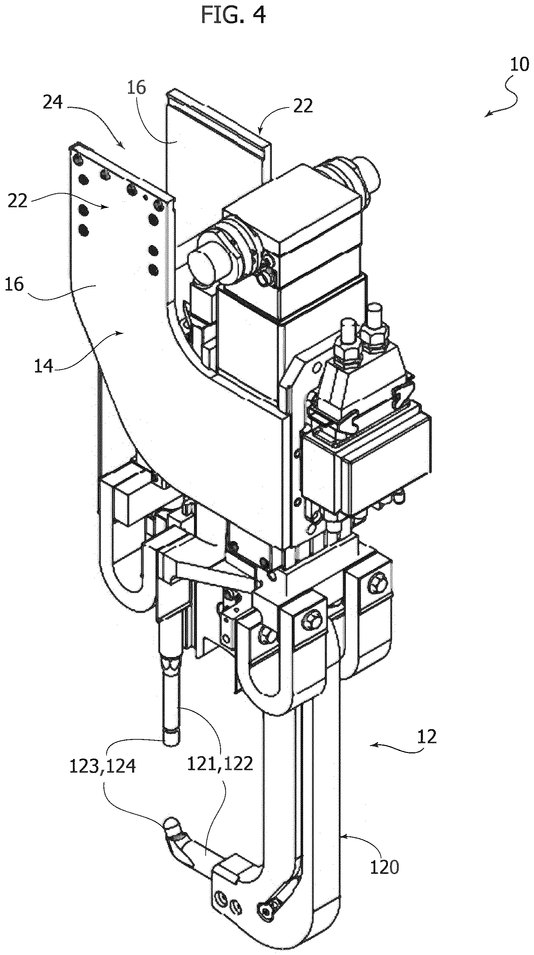

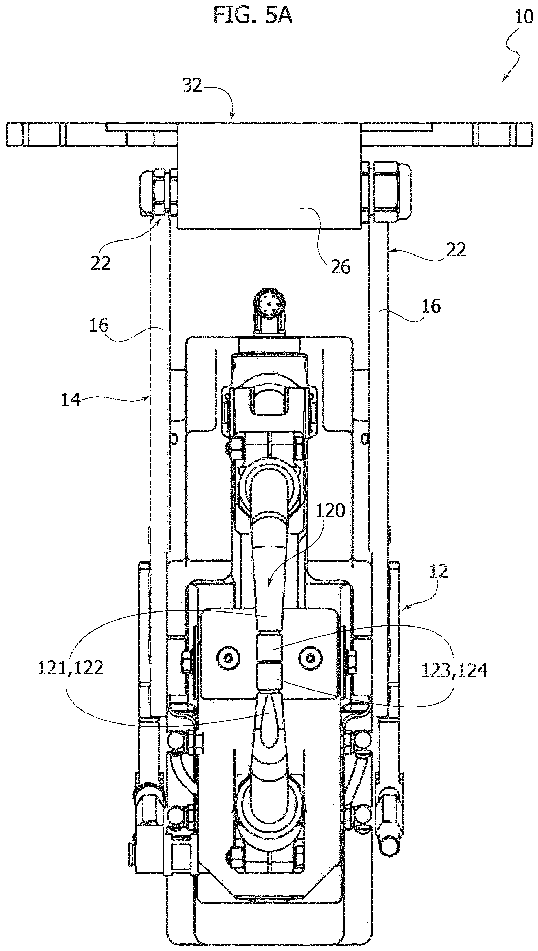

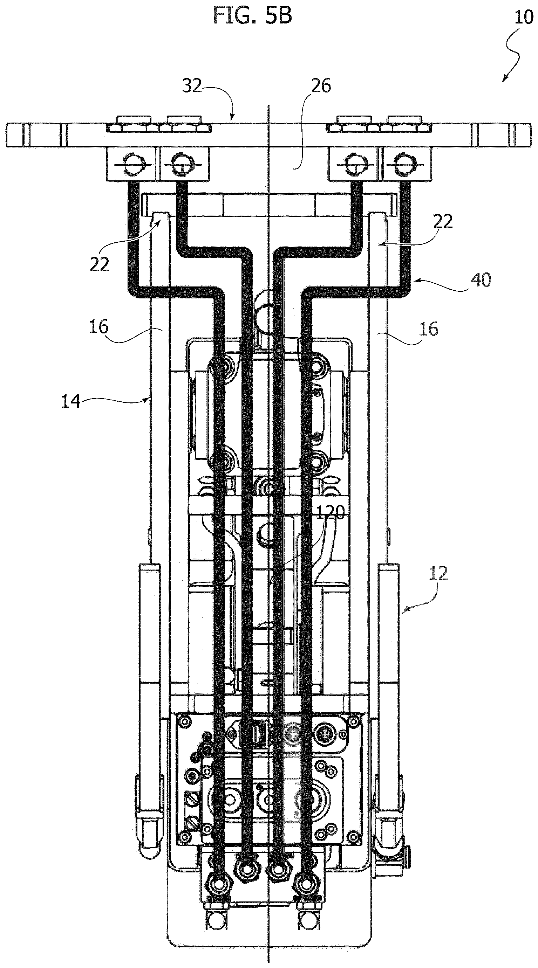

With reference to Figures 3 to 9, designated as a whole by 10 is an operating unit according to the present invention.

The operating unit 10 comprises a tool 12 and a supporting structure 14 configured to carry the tool 12.

In a preferred embodiment of the present invention, the tool 12 is a spot-welding gun 120.

In a way in itself known, the gun 120 comprise two jaws 121, 122 that are mobile with respect to one another between a closed position and an open position and carry respective electrodes 123, 124.

At least one of the two jaws is operatively connected to a respective actuator for driving the aforesaid movement.

Of course, the tool 12 may be of any type, for example a power wrench, a miller, a gripper, etc.

In a preferred embodiment, the supporting structure 14 of the operating unit 10 comprises two parallel plates 16 set at a distance from one another so as to define an internal space 24 comprised between the plates 16 themselves.

The tool 12 is received in the space 24 and is fixed to the two plates 16 via fixing means of a known type.

The supporting structure 14 comprises a connection member 26, which is set within the space 24 and connects together two end portions 22 of the plates 16.

According to an important characteristic of the solution described herein, the connection member 26 is pre-arranged for direct connection to the second annular body 100 of the tool-change device (see Figures 8 and 9) in order to connect the operating unit 10 to the wrist of the robot arm.

In one or more preferred embodiments, like the one illustrated, the connection member 26 comprises a hollow body 26A having an end wall 32 made in which is an opening 30.

The opening 30 is configured to receive the cylindrical head 101 of the tool-change device.

Moreover, made inside the body 26A is an inner seat 28 accessible through the opening 30 and configured to receive the blocking elements 102 of the tool-change device so as to ensure a firm connection between the operating unit and the wrist of the robot arm. For example, the internal seat 28 includes an annular surface having a larger diameter than the opening 30 and inclined with respect to the end wall 32, which faces in the direction opposite to the opening 30 and which is intended to come into contact with the blocking elements 102 in the respective protruding position, so as to prevent the extraction of the cylindrical head 101 from the opening 30.

With reference now to the embodiment represented in the figures, in a way in itself known the operating unit 10 comprises an electrical system 34 configured to supply electric power to the tool 12.

According to the above embodiment, the connection member 26 of the operating unit comprises at least one electrical connector 38 configured to connect electrically the electrical system 34 to electrical terminals 104 of an electrical supply circuit provided in the robot arm. In various embodiments, as in the example illustrated, the terminals 104 are carried by the body 100 of the tool-change device.

The electrical system 34 comprises wiring 36 that extends from the connector 38 of the connection member 26 up to the electrically powered devices of the tool 12, such as actuators, transformers, etc.

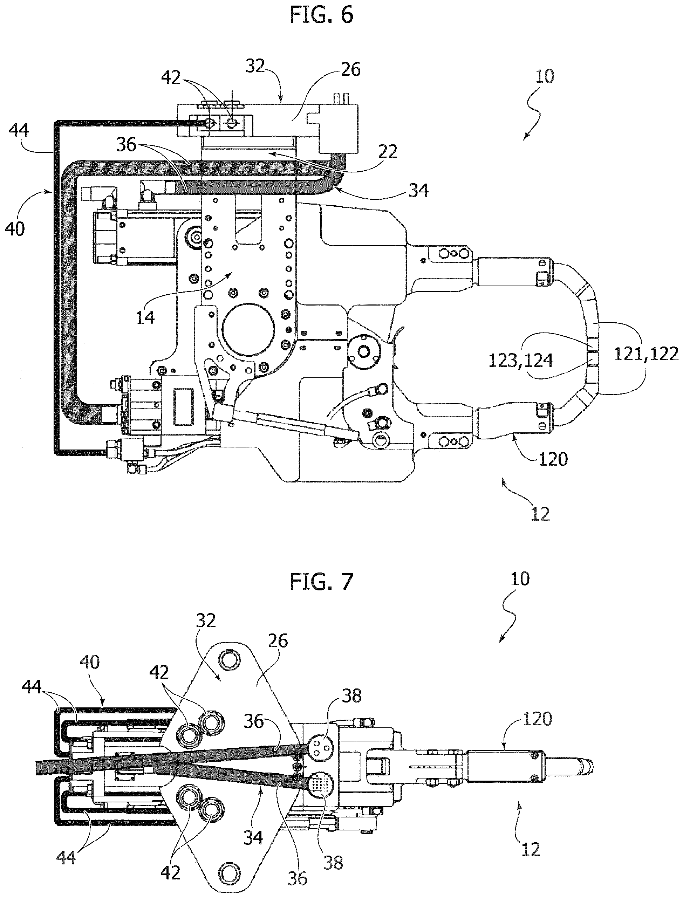

Once again with reference to Figures 6 to 9, in a way in itself known, the operating unit 10 further comprises a hydraulic and/or pneumatic system 40 configured to supply a working fluid to the tool 12.

According to the above embodiment, the connection member 26 further comprises at least one connector 42 configured to set in fluid communication the hydraulic/pneumatic system 40 with output connectors 103 of the hydraulic/pneumatic system of the robot arm. In various embodiments, as in the example illustrated, the connectors 103 are carried by the body 100 of the tool-change device.

The hydraulic/pneumatic system 40 comprises ducts 44 that extend from the connector 42 of the connection member 26 to the devices of the tool 12 that operate via the working fluid.

The solution described herein is particularly advantageous in so far as the connection member 26 forms an integral part of the supporting structure 14 of the operating unit 10 and at the same time is able to connect up directly to the tool-change device carried by the robot wrist.

The operating unit described herein hence makes it possible to provide a solution for connection of the operating unit 10 to the wrist of the robot arm that requires a smaller number of components as compared to the solution of the prior art described at the start, with consequent reduction in weight, overall dimensions, and production costs.

As has been seen above, the connection member may also be equipped with electrical or hydraulic/pneumatic connectors, thus making it possible to obtain in a simple and immediate way the electrical and/or hydraulic/pneumatic connections between the operating unit 10 and the robot arm.

Of course, without prejudice to the principle of the invention, the details of construction and the embodiments may vary widely with respect to what has been described and illustrated herein, without thereby departing from the scope of the invention as defined by the ensuing claims.

## Claims

1. An operating unit (10) that can be connected to the wrist of a robot arm comprising:
- a tool (12);
- a supporting structure (14) carrying said tool,
said operating unit (10) being **characterized in that** said supporting structure (14) comprises a connection member (26) via which said operating unit (10) can be operatively connected in a releasable way to said wrist of the robot arm,
wherein said connection member (26) has an opening (30) on an end wall (32) thereof, which is configured to receive a head (101) of a connection device (100) associated to the wrist of the robot arm, wherein said connection member (26) comprises an internal seat (28) accessible through said opening (30) and configured to receive blocking elements (102) carried by said head (101) so as to enable fixing of the operating unit (10) to said wrist of the robot arm.

2. The operating unit according to claim 1, wherein the supporting structure (14) of the operating unit (10) comprises two plates (16) parallel to, and set at a distance from, one another, to which said tool (12) is fixed via fixing means,
and wherein said connection member (26) is set between said plates (16) and rigidly connected thereto,
said seat (28) of the connection member (26) extending in the space defined between said plates (16) of said supporting structure (14).

3. The operating unit according to any one of the preceding claims, comprising an electrical system (34) for electrically supplying said tool (12), wherein said connection member (26) comprises an electrical connector (32) for electrically connecting said electrical system (34) to an electrical terminal of an electrical system of the robot arm.

4. The operating unit according to any one of the preceding claims, comprising a hydraulic or pneumatic system (40) for supplying a fluid to said tool (12), wherein said connection member (26) comprises a connector (42) for setting in fluid communication said hydraulic or pneumatic system (40) with a connector of a hydraulic or pneumatic system of the robot arm.

5. The operating unit according to any one of the preceding claims, wherein said tool (12) is a welding gun (120) comprising two jaws (121, 122) mobile with respect to one another between a closed position and an open position of the gun (120), each jaw (121, 122) being associated to a respective electrode (123, 124), and at least one actuator device (125, 126) configured to govern movement of a respective jaw (121, 122) of the gun (120) with respect to the other jaw (121, 122) of the gun (120) .
